# EUROPÄISCHE PATENTSCHRIFT

(11) **EP 2 627 610 B1**
(45) Veröffentlichungstag und Bekanntmachung des Hinweises auf die Patenterteilung: **16.12.2015**
(21) Anmeldenummer: 11773183.6
(22) Anmeldetag: 05.10.2011
(51) Int. Cl.: C03B 5/167, C03B 5/43, C03B 7/02

(54) **REDUKTION DER ABDAMPFRATE AUS PLATIN UND PT-LEGIERUNGEN**
REDUCTION OF THE EVAPORATION RATE OUT OF PLATINUM AND Pt ALLOYS
RÉDUCTION DES TAUX D'ÉVAPORATION DE PLATINE ET D'ALLIAGES DE PT

(30) Priorität: 11.10.2010 DE 102010047896
(43) Veröffentlichungstag der Anmeldung: 21.08.2013
(73) Patentinhaber: Heraeus Deutschland GmbH & Co. KG, 63450 Hanau (DE)
(72) Erfinder: LUKAS, Annette, 63517 Rodenbach (DE); LUPTON, David, Francis, 63571 Gelnhausen (DE); GÜBLER, Nicole, 61169 Friedberg (DE); MANHARDT, Harald, 63486 Bruchköbel (DE); BISSINGER, Mark, 63450 Hanau (DE); JANTSCH, Uwe, 63579 Freigericht (DE); VORBERG, Stefan, 63450 Hanau (DE)
(74) Vertreter: Kühn, Hans-Christian
(86) Internationale Anmeldenummer: PCT/EP2011/004959
(87) Internationale Veröffentlichungsnummer: WO 2012/048811

(56) Entgegenhaltungen:
- WO-A1-03/059826
- WO-A1-2011/136109
- WO-A2-02/44115
- US-A- 5 879 427
- US-A1- 2008 090 087
- US-A1- 2008 290 138

## Beschreibung

Die Erfindung betrifft die Reduktion der Abdampfrate aus Platin und Pt-Legierungen im Einsatz bei hohen Temperaturen (>1200 °C) in oxidierender Atmosphäre.

### Definitionen

Unter Platin wird ein Platinwerkstoff verstanden, der industrieübliche Anteile weiterer Elemente enthalten kann. Das sind insbesondere nicht zu vermeidende Verunreinigungen.

Unter Platinlegierung wird eine Legierung mit Hauptanteil Platin, insbesondere über 80% Platin verstanden. Der Rest ist vorzugsweise Rhodium und/oder Iridium.

Unter Abdampfrate wird die Geschwindigkeit verstanden, mit der der Materialverlust eintritt. Sie lässt sich durch Masseverlust pro Betriebszeit ausdrücken.

### Technischer Hintergrund

Bauteile aus Platin und PtRh10 werden in der Glasindustrie zum Schmelzen und Verarbeiten von Glas eingesetzt. Die Bauteiltemperaturen können dabei bis zu 1700 °C erreichen. Dabei sollen Einsatzzeiten für z.B. Feedersysteme von > 500 Tagen gewährleistet werden. Bei hohen Temperaturen > 1200 °C werden Platin und Rhodium in flüchtige Oxide überführt, die zu Materialverlust führen. Obwohl die Bauteile durch Keramikblöcke mechanisch unterstützt und thermisch isolierend umschlossen sind, was gleichzeitig einen gewissen Oxidationsschutz bietet, sind die Abdampfraten beträchtlich. Der Materialverlust steigt mit der Temperatur deutlich an. Dies führt zu einer raschen Verringerung der Wanddicke, wodurch die Lebensdauer der Bauteile drastisch reduziert wird.

Bei Laborversuchen der Anmelderin mit unbeschichteten, frei im Kammerofen stehenden PtRh10-Blechen (d=0,8 mm) wurden bei 1650 °C an Luft in 20 Tagen Materialverluste von ca. 4 % beobachtet. Auch eine Reduzierung der Temperatur auf 1600 °C führt immer noch zu einem Materialverlust von 2,4 % in 20 Tagen. Im Einsatz führen derart hohe Abdampfraten zum frühzeitigen Ausfall des Bauteils.

### Stand der Technik

In WO 2002044115 A2, US7338714B2 und EP1722008A2 geht es um ein beschichtetes Metallteil in der Glasherstellung, wobei das Metallteil an der der Glasschmelze angewandten Seite eine H₂ oder H₂ und O₂ undurchlässige Schicht aufweist.

Dabei enthält bevorzugt die H₂ oder H₂ und O₂ undurchlässige Schicht mindestens ein Glas oder ein Glasgemisch, teilweise oder ganz auskristallisiertes oder keramisches Material.

Die US 5879427 offenbart eine Düse aus Pt-Rh, die mit einer Isoliermatte aus einem flexiblen Gewebe aus Aluminiumsilikatfasern umwickelt ist.

Die US 2008/0090087 A1 offenbart ein Beschichtungssystem aus einer Matrixphase aufweisend eine Glaskomponente und disperse Phase aufweisend Aluminiumoxid und Siliciumoxid.

Die US2008/0290138 offenbart Edelmetallbauteile mit einem Netz aus Platin oder aus einer Platinlegierung und einem keramischen Material. Darauf kann eine O₂ undurchlässige Schicht aufgebracht werden.

Aufgabe der Erfindung ist es demgegenüber, ein Auffangsystem für Pt, Rh oder Ir unter oxidierender Atmosphäre bei hohen Temperaturen zur Verfügung zu stellen. Die umgebenden Keramikschichten sollen weitgehend von Edelmetallen freigehalten werden.

Eine weitere Aufgabe der Erfindung besteht in der Verlängerung der Lebensdauer und damit der Einsatzzeit der Edelmetall-Bauteile aus Platin oder dessen Legierungen im Einsatz bei hohen Temperaturen (>1200 °C) in oxidierender Atmosphäre - bevorzugt um mehr als 80%.

### Die Erfindung

Zur Verringerung der Oxidation und damit der Materialverluste wurde ein Oxidationsschutzsystem entwickelt, das sich überraschenderweise auch bei sehr großen Bauteilen mit komplexer Geometrie problemlos aufbringen lässt. Eine flexible Bandage mit offener Porosität aus einem Edelmetallnetz oder-vlies, wobei in die Poren der Bandage ein Glasbildner, oder eine Oxidkeramik und ein Glasbildner eingebracht sind, hat sich als vorteilhaft erwiesen.

Die Aufgaben werden jeweils durch ein Bauteil nach Anspruch 1 sowie durch ein Verfahren nach Anspruch 4 gelöst. Die weiteren Ansprüche geben weitere und bevorzugte Ausführungsformen der Erfindung an.

Dabei weist die Bandage eine offene Porosität auf, sowie bevorzugt eine große innere Oberfläche. In die Poren der Bandage können eine Oxidkeramik und ein Glasbildner¹, oder ein Glasbildner, welche auf die Einsatztemperatur abgestimmt sind, eingebracht werden. Dann handelt es sich um eine "getränkte Bandage" im Sinne der Erfindung. Die getränkte Bandage kann durch Tränken, Aufträufeln oder Aufpinseln einer Suspension zustande kommen. Bei mit derartigen Bandagen umwickelten Bauteilen ergibt sich die Möglichkeit, dass die Oberfläche des Bauteils bei Betriebstemperatur vollständig benetzt und der Sauerstoffzugang behindert wird. Eine vollständige Benetzung über lange Zeiten scheint nur unter Verwendung einer derartigen Bandage möglich zu sein. Dies stellt einen besonderen Vorteil der Erfindung dar. Die Abdampfverluste im Vergleich zu nicht bandagierten Bauteilen werden vorzugsweise um mehr als 80 % reduziert.

¹ Netzwerkbildner, auch Glasbildner genannt, formen die molekulare Grundstruktur von Glas. Für die Glasbildung sind keine weiteren Stoffe notwendig. So hat z. B. Quarzglas als einzigen Bestandteil SiO₂. Netzwerkbildner sind z.B. folgende Verbindungen: Siliciumdioxid (SiO₂), Bortrioxid (B₂O₃), Phosphorpentoxid (P₂O₅), Diarsentrioxid, auch Arsenik genannt (As₂O₃), Germaniumdioxid (GeO₂), DiAntimonpentoxid (Sb₂O₅)

Nicht getränkte Bandagen sind durch die offene Porosität luftdurchlässig und haben somit kaum oder keine Schutzwirkung gegen eine oxidierende Atmosphäre. Auch ist die Haftung auf den Bauteilen durch thermische Ausdehnung eher nicht ausreichend. Nicht getränkte Bandagen ermöglichen jedoch das Auffangen von trotz Abdampfschutz entweichenden Edelmetalloxiden. Es ist auch möglich, zuerst mit einer getränkten Bandage zu umwickeln und anschließend darüber mit einer ungetränkten.

Vorteile von getränkten Bandagen sind:
- Einfache Montage auch am fertigen Bauteil,
- einfache Entfernung,
- Aufnahme von PtO₂ und ähnlicher Oxide, Schutz des umgebenden Keramikblock-Materials vor Aufnahme derartiger Oxide. Dadurch kann zur Wiedergewinnung der im Oxidverlust enthaltenen Edelmetalle statt der Keramikblöcke einfach die Bandage zum Recycling gegeben werden,
- vollständige Benetzung des gesamten Bauteils,
- Stabilität bzw. Bestand der Benetzungsschicht über lange Zeit,Reduzierung der Abdampfverluste um mehr als 80 %, verglichen mit ungeschütztem Material,
- durch die Bandage wird der gegebenenfalls vorhandene Glasbildner auf dem Bauteil fixiert,
- die Bauteile müssen nicht mechanisch vorbehandelt werden (z. B. Sandstrahlen).

Die folgenden Ausführungsbeispiele erläutern die Erfindung näher. Teile- und Prozentangaben beziehen sich wie auch in der übrigen Beschreibung auf das Gewicht, sofern nicht anders angegeben.

### Vergleichsbeispiele

1. Aufbringen einer Schutzbandage aus einem keramischen Werkstoff (Al₂O₃ + 28 % SiO₂) auf ein PtRh10-Blech mit den Maßen (Breite: 150 mm, Länge 200 mm, Wandstärke 0,8 mm).
   Die Bandage (5 mm dick) wurde in eine Suspension bestehend aus Al₂O₃ Pulver (Partikelgröße: < 2,5 µm) und Wasser (30 Gew.% Al₂O₃ und 70 Gew. % Wasser) getaucht und um das Blech 2- lagig gewickelt. Das Blech wurde in einem Kammerofen 20 Tage bei 1650°C an Luft ausgelagert.
   Der Materialverlust (PtRh10-Blech) betrug 0,6 %.
2. Aufbringen einer Schutzbandage aus einem keramischen Werkstoff (Al₂O₃ + 28 % SiO₂) auf ein Pt Rh 10-Blech mit den Maßen (Breite: 150 mm, Wandstärke 0,8 mm , Länge 200,mm).
   Die Bandage (5 mm dick) wurde 2- lagig um das Blech gewickelt. Eine Suspension aus Al₂O₃ Pulver (Partikelgröße: < 2,5 µm) und Wasser (30 Gew. % Al₂O₃ und 70 Gew. % Wasser) wurde auf die Bandage aufgebracht. Das Blech wurde in einem Kammerofen 20 Tage bei 1650°C an Luft ausgelagert.
   Der Materialverlust (PtRh10-Blech) betrug 0,9 %.
3. Aufbringen einer Schutzbandage aus einem keramischen Werkstoff (Al₂O₃ + 28 % SiO₂) auf ein Pt Rh 10-Blech mit den Maßen (Breite: 150 mm, Wandstärke 0,8 mm , Länge 200 mm).
   Die Bandage (5 mm dick) wurde in eine Suspension bestehend aus ZrO₂ Pulver mit 5 % Y₂O₃ (Partikelgröße: < 5,5 µm) und Wasser (40 Gew. % ZrO₂/ Y₂O₃ und 60 Gew. % Wasser) getaucht und 2-lagig um das Blech gewickelt. Das Blech wurde in einem Kammerofen 20 Tage bei 1650°C an Luft ausgelagert.
   Der Materialverlust (PtRh10-Blech) betrug 1,1 %.
4. Aufbringen einer Schutzbandage aus einem keramischen Werkstoff (Al₂O₃ + 28 % SiO₂) auf ein Pt Rh 10-Blech mit den Maßen (Breite: 150 mm, Wandstärke 0,8 mm, Länge 200 mm).
   Die Bandage (5 mm dick) wurde in eine Suspension bestehend aus SiO₂-Pulver (Partikelgröße: < 2 µm) und Wasser (30 Gew.% SiO₂ und 70 Gew. % Wasser) getaucht und 2-lagig um das Blech gewickelt.
   Das Blech wurde in einem Kammerofen 20 Tage bei 1650°C an Luft ausgelagert.
   Der Materialverlust (PtRh10-Blech) betrug 0,5 %.

### Ausführungsbeispiel

5. Aufbringen einer Schutzbandage aus einem Pt Rh 10 Netz bzw. Vlies auf ein Pt Rh10-Blech mit den Maßen (Breite: 150 mm, Wandstärke 0,8 mm, Länge 200 mm).

Die Bandage (ca. 0,5 mm dick) wurde um das Blech gewickelt. Eine Suspension bestehend aus SiO₂ Pulver (Partikelgröße: < 2,5 µm) mit Wasser (30 Gew. % SiO₂ und 70 Gew. % Wasser) wurde auf die Bandage aufgepinselt.
Das Blech wurde in einem Kammerofen 20 Tage bei 1650 °C an Luft ausgelagert.
Der Materialverlust (PtRh10-Blech) betrug 0,9 %.

## Patentansprüche

1. Bauteil aus Platin oder einer Pt-Legierung,
zum Einsatz bei Betriebstemperaturen >1200 °C in oxidierender Atmosphäre,
wobei das Bauteil mit einer flexiblen Bandage mit offener Porosität umwickelt ist,
wobei in die Poren der Bandage
• ein Glasbildner oder
• eine Oxidkeramik und ein Glasbildner eingebracht ist,
wobei der Glasbildner und/oder die Oxidkeramik auf die Betriebstemperatur abgestimmt ist,
um die Oberfläche des Bauteils bei Betriebstemperatur vollständig zu benetzen und den Sauerstoffzugang zu behindern,
und wobei
die Bandage aus einem Edelmetallnetz oder -vlies ist.

2. Bauteil nach Anspruch 1, wobei das Netz oder Vlies aus Platin- oder Platin-Rhodium ist.

3. Bauteil nach Anspruch 1 oder 2, wobei der Glasbildner SiO₂ ist.

4. Verfahren zur Verringerung der Abdampfrate aus Platin und Pt-Legierungen im Einsatz bei Betriebstemperaturen >1200 °C in oxidierender Atmosphäre, aufweisend die Schritte
**A** Bereitstellung eines Bauteils aus Platin oder einer Platinlegierung,
**B** Umwickeln einer Außenfläche des Bauteils mit einer flexiblen Bandage mit offener Porosität,
wobei die Bandage aus einem Edelmetallnetz oder -vlies ist,
**C** Einbringen
• eines Glasbildners oder
• einer Oxidkeramik und eines Glasbildners,
wobei der Glasbildner und/oder die Oxidkeramik auf die Betriebstemperatur abgestimmt ist,
in die Poren der Bandage, , um die Oberfläche des Bauteils bei Betriebstemperatur vollständig zu benetzen
und den Sauerstoffzugang zu behindern.
**D** Einsatz bei Betriebstemperaturen von > 1200°C.

5. Verfahren nach Anspruch 4, wobei das Netz oder Vlies aus Platin- oder Platin-Rhodium ist.

6. Verfahren nach Anspruch 4 oder 5, wobei der Glasbildner SiO₂ ist.

## Claims

1. Component made of platinum or a Pt alloy,
for use at operating temperatures > 1,200°C in an oxidising atmosphere, whereby the component is wrapped with a flexible bandage with open porosity, whereby
a glass former or
an oxide ceramic and a glass former are incorporated in the pores of the bandage,
whereby the glass former and/or the oxide ceramic is/are adapted to the operating temperature,
in order to fully wet the surface of the component at operating temperature and to prevent any access of oxygen,
and whereby the bandage is made of a precious metal mesh or nonwoven.

2. Component according to claim 1, whereby the mesh or nonwoven is made of platinum or platinum-rhodium.

3. Component according to claim 1 or 2, whereby the glass former is SiO₂.

4. Method for reducing the evaporation rate of platinum and Pt alloys for use at operating temperatures > 1,200 °C in an oxidising atmosphere, comprising the steps of
**A** providing a component made of platinum or a platinum alloy;
**B** wrapping an outer surface of the component with a flexible bandage with open porosity,
whereby the bandage is made of a precious metal mesh or nonwoven;
**C** incorporating
a glass former or
an oxide ceramic and a glass former,
into the pores of the bandage,
whereby the glass former and/or the oxide ceramic is/are adapted to the operating temperature,
in order to fully wet the surface of the component at operating temperature and to prevent any access of oxygen_{[VR1]},
**D** use at operating temperatures of > 1,200°C.

5. Method according to claim 4, whereby the mesh or nonwoven is made of platinum or platinum-rhodium.

6. Method according to claim 4 or 5, whereby the glass former is SiO₂.

## Revendications

1. Élément en platine ou en alliage de platine pour l'utilisation à des températures d'exploitation >1200 °C sous atmosphère oxydante, l'élément étant enveloppé avec un bandage souple à porosité ouverte, et dont les pores de ce bandage sont remplis
• d'un vitrifiant ou
• d'une céramique oxydique et d'un vitrifiant,
et dont le vitrifiant et/ou la céramique oxydique sont accordés à la température d'exploitation, pour mouiller complètement la surface de l'élément à la température d'exploitation et pour empêcher l'accès à l'oxygène, le bandage étant constitué d'un filet de métal noble ou d'une toison de métal noble.

2. Élément selon la revendication 1, **caractérisé en ce, que** le filet ou la toison soit en platine ou en platine-platine rhodié.

3. Élément selon la revendication 1 ou 2, **caractérisé en ce, que** le vitrifiant soit du SiO₂.

4. Procédé de réduction des taux d'évaporation de platine et d'alliages de platine lors de leur utilisation à des températures d'exploitation > 1200 °C sous atmosphère oxydante, comportant les étapes suivantes
**A** mise à disposition d'un élément en platine ou en alliage de platine,
**B.** enveloppement d'une surface extérieure de l'élément avec un bandage souple à porosité ouverte, ledit bandage étant un filet en métal noble ou une toison en métal noble,
**C** mise en place
• d'un vitrifiant ou
• d'une céramique oxydique et d'un vitrifiant
le vitrifiant et/ou la céramique oxydique étant accordé(s) à la température d'exploitation, dans les pores du bandage pour mouiller complètement la surface de l'élément à la température d'exploitation et pour empêcher l'accès à l'oxygène,
**D** Utilisation à des températures d'exploitation > 1200 °C.

5. Procédé selon la revendication 4, **caractérisé en ce, que** le filet ou la toison soit en platine ou en platine-platine rhodié.

6. Procédé selon la revendication 4 ou 5, **caractérisé en ce, que** le vitrifiant soit du SiO₂.
